# EUROPEAN PATENT SPECIFICATION

(11) **EP 3 592 872 B1**
(45) Date of publication and mention of the grant of the patent: **04.05.2022**
(21) Application number: 17710509.5
(22) Date of filing: 07.03.2017
(51) Int. Cl.: C22B 1/10, C22B 1/24, C22B 11/00

(54) **PROCESS FOR ROASTING OF GOLD BEARING SULFIDE CONCENTRATE**
VERFAHREN ZUM RÖSTEN VON GOLDHALTIGEN SULFIDKONZENTRATEN
PROCÉDÉ POUR LE GRILLAGE DE CONCENTRÉ DE SULFURE AURIFÈRE

(43) Date of publication of application: 15.01.2020
(73) Proprietor: Outotec (Finland) Oy, 02230 Espoo (FI)
(72) Inventor: CHARITOS, Alexandros, 60327 Frankfurt am Main (DE); GÜNTNER, Jochen, 63796 Kahl (DE); HAMMERSCHMIDT, Jörg, 63526 Erlensee (DE); SCHULZ, Franz, 65187 Wiesbaden (DE); WROBEL, Maciej, 61197 Florstadt (DE); MATTICH, Christian, 60437 Frankfurt (DE); SCHMIDT, Eberhard, 61203 Reichelsheim (DE); CHATZILAMPROU, Ioannis, 60599 Frankfurt (DE)
(74) Representative: Keil & Schaafhausen Patentanwälte PartGmbB
(86) International application number: PCT/EP2017/055336
(87) International publication number: WO 2018/162043

(56) References cited:
- EP-A1- 0 622 467
- WO-A1-2012/113980
- DE-A1- 19 609 284
- US-A- 3 094 409
- US-A- 5 380 504

## Description

The invention relates to a process for roasting of gold bearing concentrate, wherein concentrate particles with a carbon content of more than 0.5 wt-% are fed into a roaster where they are thermally treated at temperatures between 500 and 1000 °C in a fluidized bed to form a calcine, and wherein at least parts of the calcine are withdrawn from the roaster together with a gas stream as a solid fraction.

Typical roasting processes deal with the roasting of gold, pyrite, zinc or copper. Roasting processes can be realized using dry feed and slurry feed. In case of slurry feed, the slurry is fed from a slurry tank to a slurry distribution box. Within the slurry distribution box, water is added to control roaster temperature. Alternatively, the fed slurry entering the roaster is dried. In both feeding cases the contained sulfide sulfur and organic carbon are oxidized in the roaster, whereby the roaster is often designed as a fluidized bed reactor. Also, a rotary kiln or multiple hearth furnace can be used.

Further, gases and at least small particles of the roasted concentrate (calcine) are withdrawn over the top of the roaster and fed into a cyclone. The gas exiting the recycling cyclone carries a significant calcine load which may vary from 10 to 90 % of the total product (calcine) depending on several factors such as cyclone design, gas flow entering the cyclone and granulometry of the solids entering the cyclone.

The gas and respective dust load enter at least one gas-solid separating device like the secondary cyclone(s) connected in parallel or in series, evaporative cooler or waste heat boiler (combined called cooler) where they are cooled to a temperature below 400 °C, typically 350 °C, to protect the electrostatic precipitator (ESP) while remaining above the gas dew point. Using a waste heat boiler has the additional advantage of producing saturated/superheated steam for internal use or for electricity production. The dust load escaping the recycling cyclone is separated from the gas stream in at least one gas-solid separating device, e.g. secondary cyclone(s), evaporative cooler or waste heat boiler as well as the electrostatic precipitator.

The combined calcine streams directly withdrawn from the fluidized bed, from the cooler and/or from the electrostatic precipitator enter one or more quench tanks where water is added. The number of quench tanks used is dependent on the downstream leaching concept. The resulting slurry is pumped out of the roasting plant battery to further process steps, e.g. leaching.

Calcine exiting the roaster through a discharge device next to the fluidized bed generally exhibits organic carbon content of below 0.1 wt.-% and more typically close to zero. This is due to the fact that these particles exhibit a particle size which allows them to be separated a large number of times in the primary cyclone. Hence, they are fed back to the roaster a number of times which causes a relatively high residence time within the roaster. In turn, large residence time allows for efficient organic carbon conversion in terms of oxidation. The residence time for these particles is depending on the apparative design and correlating process features. A further reason explaining that the organic carbon content of the calcine exiting through the discharge device is close to zero is that the recycle cyclone acts as a classifier allowing fine organic carbon particles to be removed.

On the contrary all particle streams collected, e.g. in the cooler and the electrostatic precipitator, in the gas line are finer in terms of particle size hence being eventually not separated in the cyclone. Considering that organic carbon is associated to the fine particles, product (calcine) reporting to the cooler has an organic carbon content of 0.3 - 5 wt.-% (more typically between 0.3 - 1.5 wt.-%) while product (calcine) reporting to the electrostatic precipitator has an organic carbon content of 0.3 - 8 wt.-% (more typically in the range of 0.3 - 2 wt.-%).

Directing of such particles into the combined calcine stream is necessary since the amount of the particles separated in the secondary cyclone(s), cooler, electrostatic precipitator is in the range of 10 to 90 % of the total product (calcine). However, the above leads to problems in the later leaching step of the calcine.

US 5,380,504 A relates to a process for roasting gold containing ore in which a flash furnace means is provided, in particular a gas suspension furnace for roasting the ore. Hot gas and the gold containing ore to be roasted are supplied to the furnace means, wherein the hot gas roasts the ore within the furnace means at temperatures between about 500°C and 700°C while the ore is suspended in the hot gas, after which the roasted ore is discharged from the furnace means along with the hot gas. In the apparatus of the present the ore to be calcined may optionally be preheated, prior to the ore entering the furnace means, by suspending the fresh ore in hot gas.

From EP 0 622 467 A1, a process for roasting refractory gold ores is known. Refractory gold ores are roasted in an oxidizing atmosphere in a fluidized bed with added carbonaceous fuels at temperatures of 500°C to 650°C. To obtain extensive combustion to CO₂ and H₂O, methanol is added as a carbonaceous fuel.

DE 196 09 284 A1 deals with a process for treating granular sulfidic ores containing gold and silver as well as iron, comprises producing a solid mixture containing metal oxide, and a flue gas containing SO₂ by roasting at temperatures of 500°C to 900°C with addition of gas containing free oxygen. The solid mixture is cooled, in which the temperature drops by around 50°C, and the cooled mixture is added to a fluidized bed reactor and SO₂-containing flue gas fed into the reactor. Metal sulfate is produced in the solid mixture and at least 10% of the sulfur content in the flue gas binds in the form of metal sulfate. The mixture containing the metal sulfate is removed from the reactor, and stirred with an aqueous acidic solution to dissolve the metal sulfate so that the solids are removed from the solution and gold and/or silver recovered.

US 3,094,409 A is directed to a method for roasting metal sulfides with a low sulfur calcine at temperatures in excess of the softening point of the initial sulfide material. Thereby, fusion between sulfide or calcine particles are substantially avoided while producing a granular, dust-free oxide product.

From WO 2012/113980 A1 a method for roasting nickel sulfide produced by precipitation into nickel oxide in a fluidized bed furnace is known. The precipitated, very fine-grained nickel sulfide precipitateis micropelletized and the micropelletized precipitateis routed to fluidized bed treatment. Fluidized bed treatment may take place in a single fluidized bed furnace, in which there is a circulating fluidized bed, or in two fluidized bed furnaces in which there is a bubbling fluidized bed.

In gold production, the alkaline or slurry is combined with the solution of sodium cyanide, potassium cyanide or calcium cyanide, Thereby, a aurocyanide complex is formed. The solubilized gold is then recovered from the solution by carbon in pulp, electro winning or the Merrill-Crowe process.

In this leaching step, containing organic carbon will lead to problems with regard to gold recovery through a phenomenon termed as "pregg robing". It is well-known that dissolved gold-cyanide complexes are absorbed by organic carbon, thus leading to loss of gold. The above mechanism is similar as is the case for activated carbon, however activated carbon can be retained through respective screens.

Organic carbon may be associated to the fine concentrate particles which may contain also pyrite and free gold. Organic carbon may further be present as separate fine particles. The association of organic carbon to fine particles is also a result of the ore feed characteristics and comminution circuit which grinds the ore before feeding it typically to a flotation circuit.

Hence, the specific residence time in the reactor is smaller for particles with reduced diameter since they are carried away by gas stream from the fluidized bed and these particles are also so small that they are not separated selectively in the cyclone and passed back into the reactor, but are withdrawn together with a gas stream into the latter process steps. As a result, the contained carbon remains unburned to a significant extent, since their respective residence time is less than few minutes, more typically less than a minute.

Therefore, the underlying reasoning behind the current invention is to find a possibility for roasting without encountering problems in later process steps, like leaching, caused by contained organic carbon.

This object is solved by a process with the features of claim 1.

In detail, the invention proposes a separation of the concentrate particles before feeding them into the roaster, where they are similarly treated at temperatures between 500 and 1000 °C in a fluidized bed to from calcine. Concentrate particles with a diameter at least 50 % smaller than the average diameter of the concentrate particles are separated as small particles. Small particles may be used directly after separation, or may temporarily be stored in a pond or dam as tailings. Such "tailings" can be used through some additional processing as also proposed herein.

Additionally or alternatively, particles withdrawn from the roaster together with a gas stream as a gas-solid fraction are separated in at least one step as small calcine particles. Then, the separated small particles out of the concentrate and/ or the small calcine particles out of the gas-solid fraction are pelletized by mixing them, optionally with the use of a liquid moisturizer/binder. At least 80 wt-% of the pellets feature a diameter of at least 80 % of the concentrate particles average diameter.

Preferably, 80 wt.-% of the pellets would have a particle size of below 3 mm for a good fluidization in the roaster. Even more preferably, 40-80 % of the pellets should be below 0.5 mm to improve circulation if a circulating fluidized bed roaster is used. Thereby, a very homogeneous of residence time is achieved. As a result larger/adequate residence times for the pellets and therefore, near complete burning the contained carbon is reached.

Summing up, concentrate particles with a carbon content of more than 0.5 wt-% are fed into a roaster, where they are thermally treated at temperatures between 500 and 1000 °C, preferably 600 to 800 °C in a fluidized bed to form a calcine. At least parts of the calcine are withdrawn from the roaster together with a gas stream as a solid fraction. Concentrate particles with a diameter at least 50 % smaller than the average diameter of the concentrate particles are separated as small particles, that can be utilized directly or stored as tailings, and/or particles from the gas-solid-fraction are separated in at least one step as small calcine particles. The small particles and/or the small calcine particles are pelletized, optional mixed with a liquid binder to form pellets, whereby at least 80 wt.-% of the pellets feature a diameter of at least 80 % of the concentrate particles average diameter, while 80 wt.-% of the particles have preferably a particle size lower than 3 mm for good fluidization and even more preferably 40-80 % have a particle size lower than 0.5 mm for good recirculation in the circulating fluidized bed, and the pellets are fed into the roaster.

In addition, small particles, separated from the concentrate particles as defined above, may be 5-100 %, preferably 5-70 %, of the concentrate particles in terms of mass flow.

Also, a proper oxygen excess, being in the range of 1 to 5 Vol.-% at the roaster exit, Is preferred to ensure a complete burning

Preferably, the refractory ore contains at least 0.5-25 g/t of gold, the typical range being between 1.5-2 g/t. The resulting concentrate after a flotation step contains 10-100 g/t, more typically 30-60 g/t and exhibits an organic carbon content of 0.5-15 wt-%, It is also preferred that the average diameter of the concentrate would be 5-200 µm and even more preferred 30-100 µm.

In a preferred embodiment of the invention, the sulfide concentrate particles are fed into the roasting from as a slurry, which simplifies the handling of the particles. Preferably, the water containing of the slurry is between 20 and 75 wt-%. Alternatively, sulfide concentrate particles are fed at as wet solids, having a water content typically below 20 wt.-%, which is termed as "dry-feeding".

Even more preferably, the amount of organic carbon is between 0.5 and 15 wt.-%, preferably 0.5 to 10 wt-%. For carbon content in this range, the invention is especially important since thereby the problems connected to a burned carbon are particularly high.

Further, the amount of organic carbon in the small concentrate particles is preferably 0.25 - 20 times the average carbon content in all concentrate particles. For these particles, only a process according to the current invention enables a later leaching without the discussed problems connected to high carbon contents.

Out of this reason, the invention is also particularly important considering the amount of organic carbon in small calcine particles, these having a residual organic carbon of above 0.3 wt.-%, preferably between 6 to 9 wt-% most preferred 8 wt.-%.

In a preferred embodiment, small particles and/or small calcine particles after processing in the roaster allow for product (calcine) stream(s) to be produced that are directed to further process steps, e.g. leaching, and contain, if averaged, a very low organic carbon content of below 0.3 wt.-% and more preferred below 0.1 wt.-%.

Another preferred embodiment of the invention sets the residence time for a circulating fluidized bed roaster to a value between 1 second and 10 hours, even more preferably between 10 min and 1 hour. Such residence time enables a complete burning of the carbon content in a process according to the invention. Residence times above 1 h are typically achieved when using a bubbling bed as a roaster at cost of high reactor footprint, while those below 1 min are achieved when using a flash type reactor operating in the pneumatic transport regime.

Additionally or alternatively, the separated small sulfide concentrate particles may exist in the form of tailings. As discussed, tailings are defined herein as small particles (i.e. small concentrate particles) that are stored in a storing device like a pond/dam or another storage area, having resulted from previous separation from all concentrate particles without further treatment. Tailings resulting from a sulfide concentrate stream, e.g. a slurry, will be typically available as pumpable slurry/paste or as a non-pumpable paste, depending on the degree of drying within the storage device. Should the tailings be stored in form of a pumpable slurry/paste then they are pumped to further processing as proposed herein, prior to the pelletization step.

In the case, that the tailings (resulting from sulfide concentrate) are dried at least partially, e.g. as a result of natural evaporation, and are not available as pumpable slurry/paste, but as semi-dried non-pumpable paste (for example as a filter cake). Therefore, the following options exist:.

Firstly, the semi-dried tailings may be re-pulped to a pumpable slurry/paste using e.g. a rotary drum re-pulper, a high shear mixer or other re-pulping equipment. Subsequently, they are pumped to further processing as proposed herein, prior to the pelletization step.

Alternatively, the semi-dried tailings can be further de-watered/dried with use of any type of drying technology, which could be distributing the tailings onto a drying pad and utilize sunlight as a source of heat or using a closed space where pre-heated and potentially pre-dried air is blown into. Such an approach also facilitates material transport directly to the subsequent pelletization step, which may then take place via a conventional conveyor system.

Furthermore, it is preferred that the separated small particles (including tailings in a pumpable slurry/paste form) are de-watered to water content of less than 20 wt-%. This de-watering step can be realized with use of a filter press or any other water removal equipment including dryers. Typical filter press for this use may be Outotec Larox^{®} filter. The purpose of this step is to reduce the moisture content of the incoming small particles slurry with a water content in the range of 20 and 70 wt-% suitable for the downstream size enlargement step (pelletization step), i.e. typically below than 20 wt-% and more preferably below 15 wt-%. Thereby, the small particles can be pelletized, also without mixing of small calcine particles, while the formed pellets during the subsequent pelletitzation step are stable. In the case of a filter press, produced filtrate can be used as a moisturizer/binder in the separate pelletizing step. Further, this water can be used as process water i.e. in the evaporative cooler or other consumers. An alternative to a filter press could be the utilization of a material centrifuge or thickener in combination with use of flocculants and chemical additives.

A further alternative for de-watering small particles (i.e. small concentrate particles) to achieve a moisture value of below 20 wt.-%, preferably below 15 wt.-%, is using a dryer. A combustion gas can be used a heat source, while heat transfer may occur by direct contact with combustion gas or indirectly via a heat exchange surface. The heated gas can also come from a calcine cooler or any other heat exchanger device in the gas stream cleaning.

In a preferred embodiment of this invention, utilization of de-watering can be avoided by obtaining the required moisture for the subsequent pelletization of below 20 wt.-% and even more preferably of below 15 wt.-% through mixing. This can be achieved by mixing the small particles or tailings in form of slurry or paste with a moisture of 20-70 wt.-%, more preferably between 20-35 wt.-% with small calcine particles which maybe are present as dust and have a water content of between 0 and 3 wt.-%, since they have been treated within the roaster thermally. Thereby, stable pellet formation is achieved without de-watering equipment utilization. The more preferred moisture range of 20-35 wt.-%, regarding the small particle stream, is more easily achieved in case of re-pulping of tailings existing as semi-dried solids, since the end moisture can be controlled during the re-pulping process through water addition.

Mixing of the small concentrate particles and small calcine particles may take place in the pelletizer itself or in a separate mixing equipment. In the above case the analogies of mixing between the small particles or tailings (i.e. small concentrate particles) with small calcine particles is given by (i) the mixture pelletization moisture, i.e. the moisture that allow pellets (granules) formation which is typically below 20 wt.-% and more typically below 15 wt.-%, as discussed above and (ii) the roaster heat balance, considering that small calcine particles are essentially an inert solid.

However, even in the case described in the paragraph above, i.e. where small particles or tailings are supplied in the form of slurry/paste in order to mix with small calcine particles, any of the above de-watering steps are possible (including filter press, centrifuge, thickener or dryer) in order to minder their moisture of the small particles or tailings (i.e. small concentrate/ore particles) stream. This may be the case if the moisture of the small particles or tailings (i.e. small concentrate particles) is too high for mixing with small calcine particles at an allowable mixing analogy. Too high moisture of the small particles or tailings (i.e. small concentrate particles) would lead to a too high amount of small calcine particles required for achieving the mixing moisture for the pelletization step of below 20 wt.% and preferably below 15 wt.-%. This would lead to problems regarding availability and roaster heat balance. Preferred, mixing ratios between small particles and small calcine particles are in the range of 0.1-10 and more preferred between 1 to 2.

A further embodiment of the invention foresees to mix tailings available as-, or processed to pumpable slurry with the concentrate particle stream present as slurry. Moreover, for this embodiment no separation of concentrate particles is foreseen thus producing no small particles. The mixture occurs prior to concentrate thickening or within the downstream slurry tank depending on the required moisture content of the slurry fed to the roaster.

Omitting the separation step for the concentrate particles, small particles of high organic carbon will enter the roaster in a not pelletized form, whereby a significant part of which will leave the roaster with the gas exiting the recycling cyclone. They will be then separated from the gas in at least one step and will report to the cooler and electrostatic precipitator as small calcine particles, which exhibit a high amount of organic carbon. Directing the small calcine particles to the roaster, after a pelletization step, will lead to a residence high enough for complete organic carbon burn-out.

As discussed, the pelletization step require at a moisture between 10 and 20 wt.-% and more typically between 10 and 15 wt.-%. Since calcine particles are present as dust (i.e. have a moisture value of 0-3 wt.-%), the moisture value below 20 wt.-% can be achieved through the addition of water or any other liquid or with the addition of a part of the concentrate particles stream fed to the roaster which, as discussed has a moisture value of 20-70 %. Hence, such a stream can be combined for pelletization of small calcine particles at the appropriate moisture. Utilization of the concentrate particles in such a way has the additional benefits that water consumption is minimized since no further liquid addition (which has a negative impact on the roaster heat balance) is required for pelletization, other than that contained in the slurry, and that small calcine particle formation is also minimized since part of the concentrate particles are pelletized. A further advantage, of this process is that the moisture value of the tailings slurry can be chosen such that facilitates material transport in case of tailings re-pulping. The tailings can then be mixed with the concentrate particles within the concentrate thickener from where they are directed to the slurry tank and roaster. Feeding to the thickener is advantageous since both stream can be de-watered prior to the roaster thus having a positive effect on the roaster balance.

Alternatively, should the additional tailings stream have a negative impact on the concentrate thickener performance in terms of e.g. thickener overflow clarity, the re-pulped tailings stream may be added to the slurry tank directly at a ratio that does not increase the water content within the slurry such that the roaster heat balance unbalanced.

Further, it is preferred to operate the pelletizing process in batch mode. This requires at least one buffer and one dosing system. Batch mode will lead to a higher product quality. This is justified since narrower particle size distribution (i.e. 80 % of pellets below 3 mm to ensure pellet fluidization and even more preferably 80 % of pellets below 0.5 mm for good solid circulation when utilizing a Circulating Fluidized Bed roaster) and higher solid density (associated to pellet stability) of the produced pellets can be achieved in batch mode. This is justified, since during batch mode all particles remain in the pelletizing equipment the same amount of time and undergo uniform processing, whereas during continuous operation a residence time distribution exists. Thereby continuous processing leads to some particles being processed for a too short period resulting to too small and too week pellets as well as some oversized pellets.

Based on arrangement issues, the buffer system may consist of one or more buffer bins followed by one or more dosing bins. Buffer/dosing bins with compartments may also be used to avoid building numerous bins. The number of buffer/dosing bins and their compartments will also depend on the amount of materials to enter the pelletizing step as dry solids or wet solids with a moisture of less than 20 wt.-% more typically below 15 wt.-%. Based on the description of the invention embodiments described herein such solids could be (i) small concentrate particles (small particles) optional including tailings, (ii) small calcine particles, (iii) solid binders or (iv) other solids, e.g. for controlling the pelletization moisture. The buffer bin(s) ensure that feed material remains available, while the dosing bin compartment(s) has the purpose to release a pre-measured feed material quantity at the required time in respect to the pelletization step. Discharge of the buffer bin solids may be aided through a discharge device aiming at mechanical agitation which may or may not employ a series of rotating screws or rotating equipment. Discharge of the buffer bin may be facilitated by pressure air guns, tumbling hummers, or vibrators.

Moreover, the number of dosing bins or dosing bin compartments will depend also in the way of feeding of the above solids to the granulator, e.g. when mixing a slurry/paste feed with small calcine particles, small calcine particle addition may be required in more than one charges to enhance the mixing process. The dosing bin(s) act(s) as a dosing vessel for the subsequent pelletization equipment. Thereby, material included in the dosing bin(s) must be controlled. Hence, the dosing bin(s) must employ a respective solid inventory measurement method (kg), such as placing the dosing bin(s) on weight cells. The dosing bin is followed by a downstream valve capable of discharging the content of the vessel compartment(s) within seconds so as to facilitate operation of the pelletization equipment. Dosing operation is facilitated when the dosing bin is fed through an upstream high speed feeder, which may include a high speed conveyer or high speed screw conveyor. Discharge of the buffer bin may be facilitated by pressure air guns, tumbling hummers, or vibrators.

As mentioned in the paragraphs above the slurry/paste feed to the pelletizing equipment may include (i) small particles including tailings or (ii) concentrate particles or a (iii) mixture thereof. The slurry/paste feed is fed to the pelletization step via dedicated nozzles and acts effectively as a liquid, moisturizer/binder.

Moreover, it is a subject of the invention that the liquid binder used in the pelletizing equipment which comprises water, or an aqueous solution containing sulfates and/or low acid concentration. Such addition increases stability of produced pellets by further chemical bonds, thus enhancing pellet stability.

Additionally, a solid binder can be added which preferably includes solids from a device gas-solid-separation device, i.e. an evaporative cooler, or a waste heat boiler or an electrostatic precipitator. These solids exhibit typically high sulfate sulfur content in the range of 1-5 wt.-% and have an average particle size of 5-100 µm, the sulfate content being formed due to favorable process conditions in these equipment in terms of oxygen partial pressure and temperature. In other words, the small calcine particle processing proposed here, increases pellet stability since the processed solid is a binder itself.

Batch phases have duration of below 1 hour, more preferably between 3 and 15 minutes.

Further, it is preferred to feed the pellets into the roaster as wet solids of below 20 wt.-% moisture and without a slurry preparation. Such feeding is termed as "dry feeding". Slurry feeding of pellets to the roaster would be detrimental for their stability since they would partially decompose to their primary grain.

Moreover, a preferred embodiment of the invention is a milling and/or grinding of the calcine particles. This is due to the fact that for later process steps, and especially during leaching, smaller average diameters are preferred. So, the increasing of the average diameter caused by the pelletizing is avoided.

Moreover, the process can be operated in a corresponding plant.

Such a plant features a fluidized bed roaster for similar treatment of concentrate particles at temperatures between 500 and 1000 °C, preferably 600 to 800 °C, to form a calcine. Further, such plant features at least one solid fraction conduit for withdrawing the solid fraction from the roaster and a gas-solid fraction conduit for withdrawing a gas-solid fraction from the roaster.

It is preferred that the plant also contains a particle separating device for separating concentrate particles with a diameter at least 50 % smaller than the average diameter of the concentrate particles and/or at least one gas separating device for separating particles from the gas-solid fraction as small calcine particles from the gas stream with the intention of recycling them to the roaster after processing as described herein. Further, the plant according to the invention contains a pelletizer wherein the small particles and/or the small calcine particles are mixed with a liquid binder to form pellets. Thereby, at least 80 wt-% of the pellets features a diameter of at least 80 % of the concentrate particles average diameter and that 80 % of the pellets have preferably particle size lower than 3 mm, and even more preferably 40-80 % have a particle size lower than 0.5 mm for good recirculation especially for a circulating fluidized bed roaster. Moreover, a recycling conduit from the pelletizer into the roaster is foreseen. Thereby, it is possible to ensure that no carbon containing particles are fed into a later process step like leaching.

A preferred embodiment of the plant features a circulating fluidized bed as a roaster for a very homogeneous heat and mass transfer. However, also a bubbling fluidized bed reactor is possible.

In the case of a circulating fluidized bed reactor, part of the resulting calcine exits the roaster through the seal pot and/or an underflow exit (in both cases through a discharge device) located near the bottom part of the reactor and enters a product (calcine) cooler, which may be a fluidized bed and may or may not have bundles for indirect heat removal and may or may not utilize direct cooling through water injection. The aforementioned discharge device may include a configuration utilizing a cone valve, rotary valve or screw feeder.

The pelletizing device itself contains a low or high shear mixer, a tumbling-disc or fluidized bed granulator or any other size enlargement equipment.

A preferred embodiment foresees a high shear mixer as the pelletizer. A high shear mixer operated in a batch mode is most preferred due to the quality of the product, especially a very small distribution of the resulting pellets diameter and a compact pellet density leading to high pellet stability.

Further, the gas-solid separating device is an evaporative cooler and/ or a waste heat boiler and/or an electrostatic precipitator. A bag filter or multi-cyclone (multi-cyclone) arrangement might also be utilized as a gas-solid separating device. One or more additional cyclones may also be utilized connected in parallel or in series, preferably after the recycle (primary) cyclone. Material from the underflow from the additional cyclone(s) may exhibit low or high organic carbon content depending on the organic carbon association to the particle size distribution within the solids entering the additional cyclone(s). Hence, calcine resulting from the underflow of the additional cyclone(s) may be re-directed to the pelletizer and roaster or be discharged as product depending on its organic carbon content.

Coarse calcine pellets and coarse calcine particles are removed from the fluidized bed via an underflow exit. This is preferred since some of the pellets or particles in the circulating fluidized bed may be too large to be carried out of the roaster, while others may be too large to fluidize properly. Hence, without an underflow exit the roaster would break down as a result of material accumulation.

In addition, the invention can be extended to sulfide ore roasting, i.e. roasting of ore that has not undergone through a flotation circuit, with the purpose of recovering gold.

Even more, the invention can be extended to a two-stage roasting process i.e. aiming at the removal additionally of arsenic, with the purpose of recovering gold.

Moreover, the invention can also be extended in treating calcine from a Biological oxidation (BIOX) plant or Pressure oxidation plant (POX) which may still contain organic carbon on which may also contain arsenic in the form of iron arsenates (scorodite) which may hinder gold recovery significantly. Hence, the aim hereto would be removal of organic carbon, arsenic and any residual sulfur. The purpose hereto is to further recover gold from above materials.

Further developments, advantages and possible applications can also be taken from the following description of exemplary embodiments and the drawings. All features described and/or illustrated from the subject matter of the invention per se or in any combination, independent of their inclusion in the claims or their back reference.

In the drawings:
- Fig. 1: a first embodiment of the invention including a separation of the small particles out of the concentrate particles including de-watering equipment for small particles (i.e. small concentrate particles),
- Fig. 2: a separation of small calcine particles out of the gas-solid fraction,
- Fig. 3: a combination of both particle separations where small particles are de-watered prior to mixing with small calcine particles,
- Fig. 4: an alternate combination of both particle separations where small particles separated out of the concentrate particles and small calcine particles separated out of the gas-solid fraction are mixed in the pelletizer and
- Fig. 5: a separation of small calcine particles out of the gas-solid fraction while mixing small particles present as tailings (i.e. resulting from previous separation from concentrate particles and stored in a pond/ dam or area) with concentrate particles.

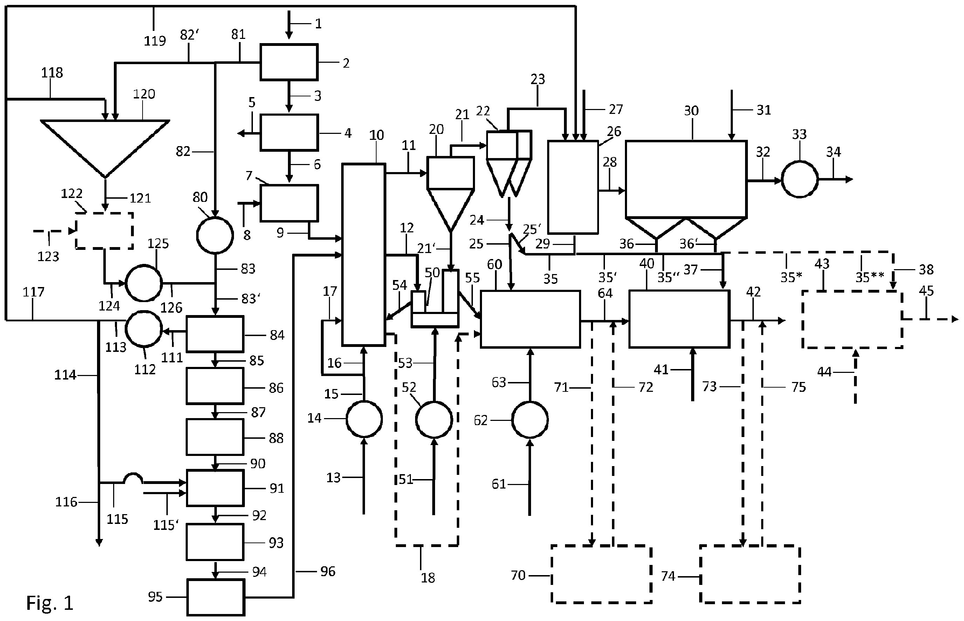

In Fig. 1, a feed of concentrate particles exiting the flotation circuit is fed via line 1 to a particle separation device 2, which may include an arrangement of multiple hydro-cyclones thus allowing for separation of bigger particles by exerting a respective centrifugal force. From there, the bigger particles are passed via line 3 into a thickener 4. Thickener overflow stream (line 5) may be used from process water consumers (e.g. evaporative cooler 26, connection not shown). Through line 6 the thickened concentrate is directed to a slurry tank/slurry distribution box arrangement 7, wherein the water content of the slurry is adjusted to allow for temperature control within the roaster 10. Water addition is carried out via line 8.

Via line 9, the slurry is fed into the reactor 10 which is designed as a fluidized bed reactor. The roasted particles are at least partly withdrawn via line 11 together with an off-gas stream and passed into a cyclone 20. Therein, bigger particles are separated from the gas-solid flow. The off-gas exiting the roaster 10, includes a solid fraction, composed of small calcine particles.

The gas-solid fraction is passed, via line 21, to two secondary cyclones 22 connected in parallel wherein part of the small calcine particles are separated (coarser fraction) from the gas flow. Further the remaining gas-solid flow is passed into an evaporative cooler 26, via line 23. Therein, cooling medium is fed in via line 27. Afterwards, the gas stream is passed via line 28 into an electrostatic precipitator 30, wherein air for protecting the insulators is added through line 31. The gained particles from the secondary cyclones 22 may be optionally passed to the calcine cooler 60 through lines 24, 25 and from there to quench tank 40 via line 64. In case of arrangement issues disallowing for the above connection to take place the secondary cyclones can be connected to the quench 40 via lines 24, 25', 35, 35', 35" and 37 thus by-passing the cooler 60.

Alternatively, depending on the organic carbon content of the secondary cyclone discharge (line 24), the secondary cyclones may be connected to a further quench 43 (shown via dotted line) via lines 24, 25', 35, 35', 35", 35*, 35** and 38. The gained particles are passed via line 29, 35', 35", 37 from the evaporative cooler 26 to the quench 40 or via 29, 35', 35", 35*, 35**, 38 to the further quench 43. Furthermore, the particles are passed via lines 36, 36' from the electrostatic precipitator 30 through lines 35", 37 into the quench 40 or further quench 43 via lines 35", 35*, 35**, 38 depending on the downstream leaching concept.

The resulting gas fraction is passed via line 32 through an intermediate fan 33 and line 34 into a further (not shown) gas cleaning and potentially sulfuric acid plant production section.

The roaster 10 is designed as a fluidized bed reactor. Therefore, fluidizing gases like air for oxidation of sulfide sulfur and organic carbon is passed via line 13, blower 14, line 15 and 16 into the roaster 10 as a fluidizing gas. Gas is optional also inserted via line 17 as secondary gas.

It is also possible to have further gas inlets (not shown) utilizing the blower 14 or further blowers. The dotted line 18 shows that is also possible to withdraw parts of the calcine particles out of the fluidized bed in the roaster 10. Preferably, the withdrawing take place through a conduit at the bottom or side of the reactor, more preferred close to the nozzle grid used for the homogeneous distribution of the gas stream 16. The purpose of line 18 is to be able to discharge roaster pellets or other oversized calcine particles that are too large to be entrained with the gas flow to line 11 and hence have to be discharged through line 18, which is optional designed as an underflow line equipped with a discharge device, to downstream equipment. The oversized particles pass to the calcine cooler 60 via line 18. However, depending on arrangement issues line 18 could be directed directly to quench 40 or to a separate quench (not shown).

Particles separated into the cyclone 20 are passed via line 22 into a solid transportation system 50 like a seal pot. Via lines 51, a blower 52 and line 53 air is inserted to fluidize at least parts of the particles of the solid transportation system. Solid particles are transported partly via line 54 back into the roaster 10 while the other part of the particles is fed via line 55 into a cooler 60. In the case of the cooler 60 is designed as a fluidized bed cooler, air is fed in via line 61, blower 62 and line 63. However, other cooler designs are possible.

Via line 64, the particles are further fed into the quench 40, wherein also line 37 passes in. Via line 41, quench water is added so as to cool solids and obtain a pumpable slurry. The quench particles are fed via line 42 into downward process steps like a cyanide leaching.

Lines 35*, 35**, dotted line 38 show the possibility to direct the calcine from the spray cooler and electrostatic precipitator to a separate quench 43. Via line 44, quench water is added so as to cool solids and obtain a pumpable slurry. The quench particles are fed via line 45 later process steps like a cyanide leaching.

Additional dotted lines 71, 72 shows the possibility to pass particles into a calcine dry mill 70. Particles are then fed back into line 64 via line 72.

Further dotted lines 73 and 75 show an option to lead the particles via line 73 into a wet grinder 74 and back via line 75 into line 42.

If required (not shown), a similar dry grinding- and wet grinding apparatus can be used prior and after the further quench (43), respectively.

The essential point is that in the particle separating device 2, smaller particles separated and passed via line 81, 82 into a slurry pump 80. In absence of a downstream equipment, the small particles can be transported in a slurry form, termed as "tailings" as discussed above, to the tailings pond/dam or area 120 via lines 81, 82'. In case of normal operation small particles are passed from the slurry pump 80 via lines 83, 83' into a de-watering device 84. From there, de-watered solids are passed into a buffer 86 via line 85. From there line 87 leads to a dosing system 88. After that, line 90 feeds particle into the pelletizer 91 and from there via line 92 into an additional buffer 93. From there, line 94 brings the pellets into a feeding device 95 and from there via line 96 to the roaster solid transport system (loop seal) 50 or alternatively directly at the roaster 10 and more specifically at the bottom, center or top of the reactor.

Water from the de-watering device 84 is fed via line 111 into a pump 112. From there, water is fed into the pelletizing device 91 via lines 113, 114 and 115 where it is used as a moisturizer/binder. Further, water is withdrawn via lines 113, 114 and 116. Alternatively, the filtrate can be used as cooling medium in the evaporative cooler through lines 113, 117 and 119. Also, filtrate water can be fed via lines 113, 117 and 118 into a tailings pond/dam or storage area 120. Such a connection replaces water evaporated in the above mentioned pond, dam or storage area, thus keeping the contained tailings as pumpable slurry/paste. Extra liquid binder/moisturizer can be added to the pelletizer via line 115' to set the desired pellet moisture value.

The tailings pond/dam or area 120 serves the purpose of storing tailings in case that equipment 84, 86, 88, 91, 93, 95 are momentarily not in service or not yet installed.

From the tailings pond/dam or area 120, particles pass via line 121 potentially to a re-pulper 122 which may or may not be required depending on the condition of the tailings (thus represented with a dotted line), i.e. if they are available as pumpable slurry/paste or as not pumpable paste. The latter is associated with the material properties of the tailings, the time of storage within tailings pond, dam or area 120 and the evaporation rate of water which depends also on local weather conditions. For re-pulping tailings to a pumpable slurry/paste a liquid phase is required, e.g. water, added through line 123. The re-pulped pumpable slurry/paste is then transferred to a slurry pump 125 via line 124 and from there into line 83' via line 126. Hence, operation may take place with a "fresh feed" of small particles generated in the particle separation device 2 or though already separated small particles originating from the tailings pond, dam or area 120.

Fig. 1 shows the separating of particles before feeding them into the roaster in a respective step as small particles only. It also shows the utilization of small particles present as tailings. However, this option requires de-watering equipment for small particles.

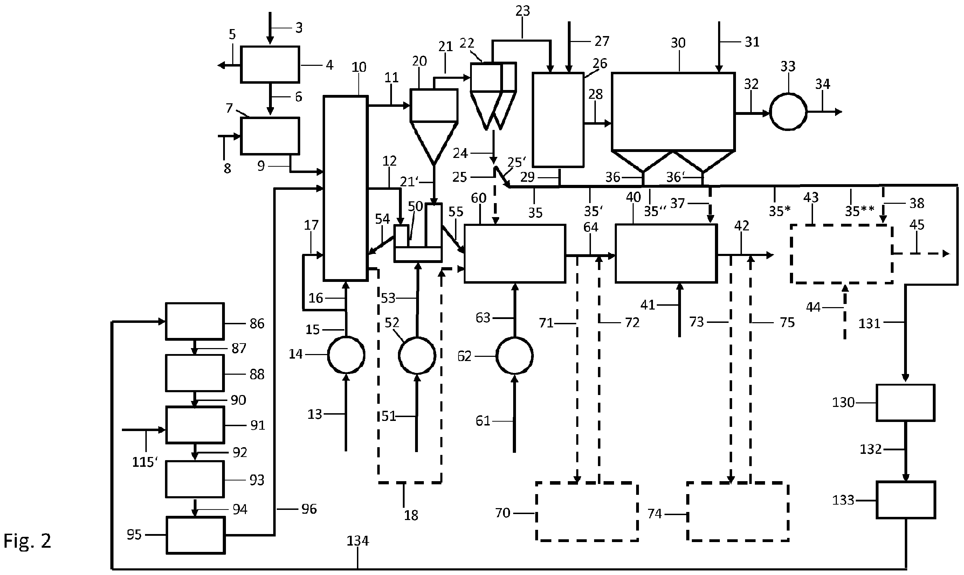

Fig. 2 shows a similar design for separating, pelletizing and feeding to the roaster small calcine particles that are separated potentially from the secondary cyclones 22, from the evaporative cooler 26 as well as the particles collected the hot electrostatic precipitator 30. Concentrate particles, undergoing no separation, enter the system via line 3 and thickener 4. Gained solids from the secondary cyclones 22 are transferred to a rotary drum cooler 130 (or other type of cooler) via lines 24, 25', 35, 35', 35", 35*, 35**, 131.

It should be noted that typically small calcine particles separated from the secondary cyclones are coarser than the rest of the small calcine particles and contain a lesser content in terms of organic carbon thus potentially allowing discharge to the product stream via lines 24, 25. Solids from the evaporative cooler 26 are transferred to the rotary drum cooler 130 (or other type of cooler) via lines 29, 35', 35", 35*, 35**, 131. Solids from the electrostatic precipitator are transferred to the rotary drum cooler 130 (or other type of cooler) via lines 36, 36', 35", 35*, 35**, 131.

From there particles are transferred to a conveying system 133 via line 132 and subsequently to the buffer 86. Line 87 leads the particles to a dosing system 88. After that, particles are fed via line 90 into the pelletizer 91 and from there via line 92 into an additional buffer 93. Since the small calcine particles feature low or no water content, a liquid moisturizer/binder is added to the pelletizer 91 via line 115'. From the pelletizer 91, the pellets are transported via line 94 into a feeding device 95 and from there via line 96 to the roaster solid transport system (loop seal) 50 or alternatively directly at the roaster 10 and more specifically at the bottom, center or top of the reactor. So, it is also that some or all of the gained solids from the secondary cyclones 22, evaporative cooler 26 and electrostatic precipitator 30 may be purged from being recycled to the roaster 10 via lines 25, 37 or 38 due to e.g. roaster heat balance considerations caused e.g. by a lower than expected heating value of the concentrate particle feed entering the system via line 3.

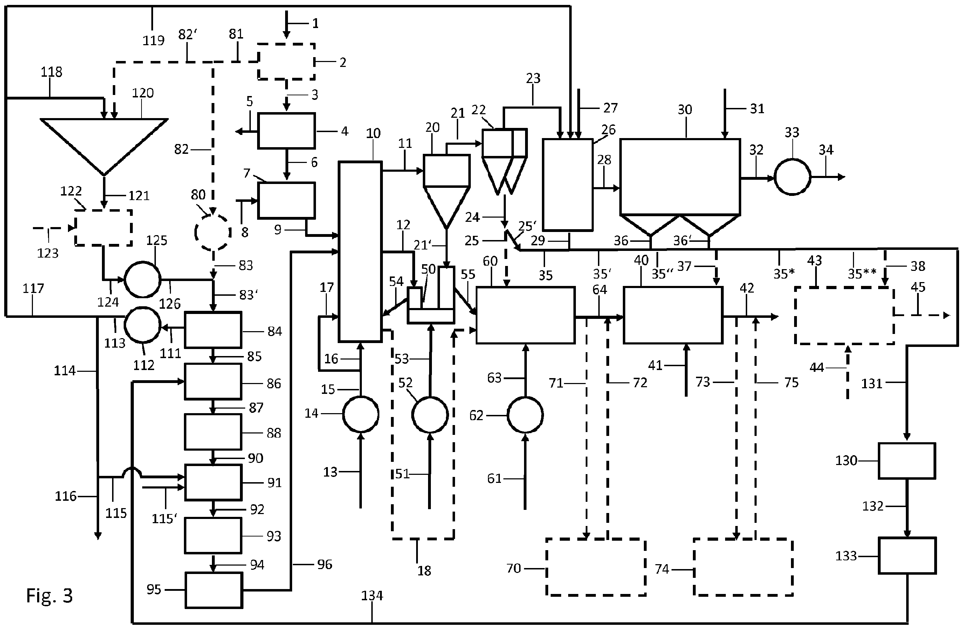

Fig. 3 is a combination of separating concentrate particles before feeding them into the roaster in a respective step as small particles and collecting small particles out of the off-gas stream as small calcine particles. Both particles types are pelletized in a pelletizer 91. However, also here a de-watering device 84 is utilized in this embodiment. Both, small particles and small calcine particles, out of the secondary cyclones 22, evaporative cooler 26 and electrostatic precipitator 30 enter the buffer 86 after being processed within equipment 130, 133, as discussed in the case of the embodiment of Fig. 2. Mixing of the small particles and small calcine particles may occur within the buffer 86 or, if they are stored in separate compartments of the buffer 86, within the pelletizer 91. The mix of small particles and small calcine particles is then processed through equipment 91, 93, 95 before entering the roaster 10 or solid transportation system 50, as also discussed for the embodiments of Fig. 1 and Fig. 2 within the paragraphs above.

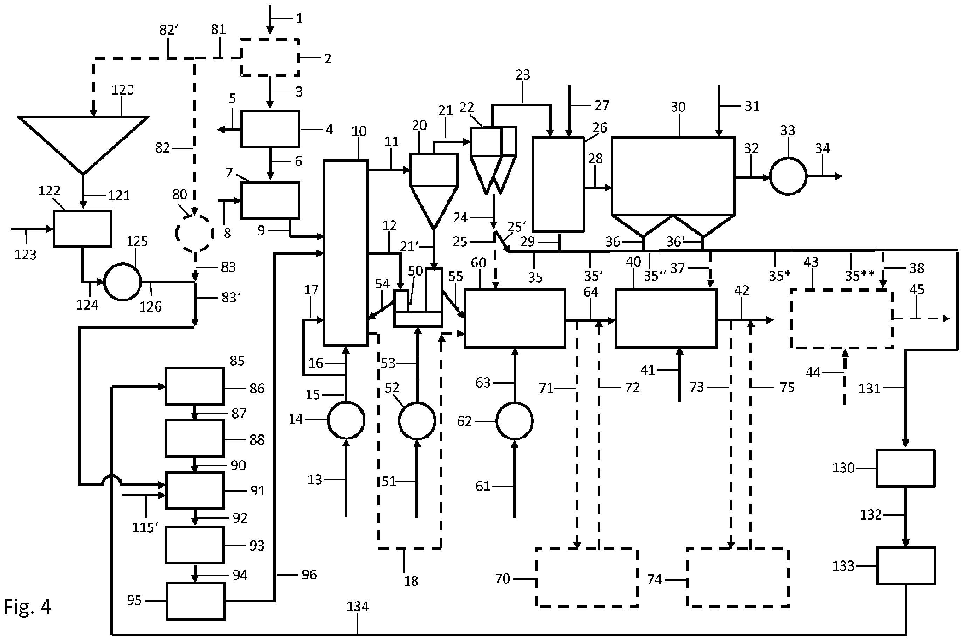

Fig. 4 is a further combination of separating concentrate particles before feeding them into the roaster in a respective step as small particles and collecting small particles out of the off-gas stream as small calcine particles. Both particles types are pelletized in a pelletizer 91. In contrast to Fig. 3 the small particles resulting from fresh concentrate particles or tailings) are not de-watered. After pump 80 (processing "fresh" concentrate particles) and pump 125 (processing tailings) the small particles are fed in the form of pumpable slurry or paste to the pelletizer 91. Small calcine particles (potentially resulting from the secondary cyclones 22, evaporative cooler 26 and electrostatic precipitator 30) enter the pelletizer 91 after being processed within equipment 130, 133, 86 and 88, as discussed in the case of the embodiment of Fig. 2.

Hence, small particles and small calcine particles are mixed within the pelletizer 91 to form pellets. Since the small particles enter the pelletizer in the form of pumpable slurry/paste and small calcine particles in a dry condition, the required moisture may be attained through mixing of these two components. Any additional liquid moisturizer/binder addition to the pelletizer 91 may then occur through line 115'. From the pelletizer 91, the pellets are transported via line 94 into a feeding device 95 and from there via line 96 to the roaster solid transport system (loop seal) 50 or alternatively directly at the roaster 10 and more specifically at the bottom, center or top of the reactor. The separation device 2 and associated pump 80 is represented here via a dotted line since the resulting moisture of stream 82 is typically high leading potentially to too high small calcine particle flow required within the pelletizer to obtain the necessitated pelletization moisture value.

On the contrary the moisture of the small particles coming from the pond/dam or area 120 is typically lower and can be controlled through water addition 123 in the re-pulper 91 to obtain the desired moisture value when mixing with small calcine particles. Thus the re-pulper 122 is depicted here with a full line.

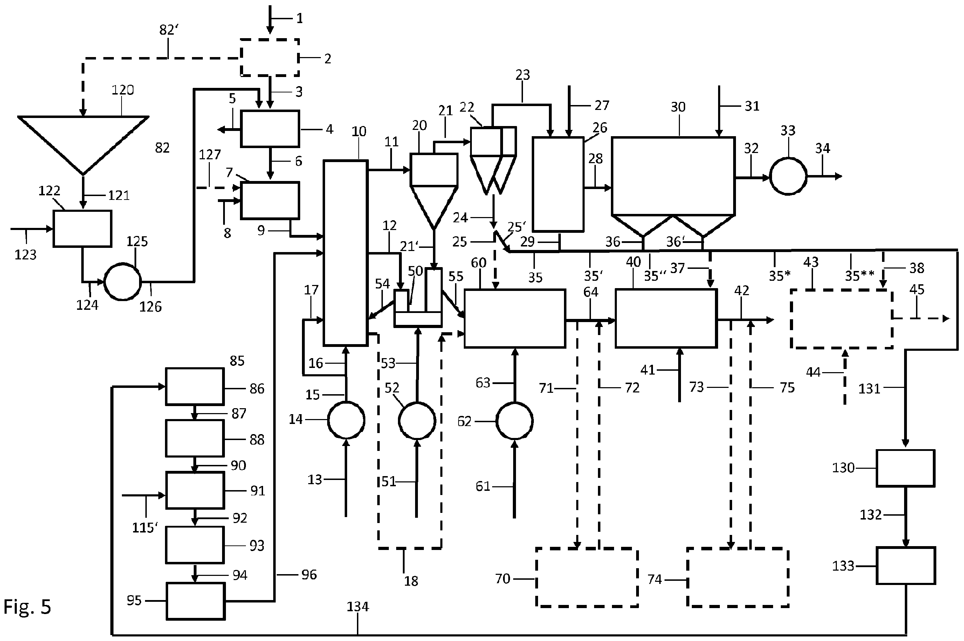

Fig. 5 is a further embodiment separating, pelletizing and feeding to the roaster small calcine particles that are separated potentially from the secondary cyclones 22, from the evaporative cooler 26 as well as the particles collected the hot electrostatic precipitator 30. It defers to the embodiment of Fig. 2 in that it allows for the utilization of previously produced small concentrate particles (small particles), i.e. tailings, which have resulted from a in a prior point of time installed particle separation device 2 (shown with a dotted line) which had been treating the concentrate particle stream.

The tailings are utilized in that they exit the tailings pond/dam or area 120 via line 121 and potentially enter the re-pulper 122 in the case where they are not present as pumpable slurry/paste, but as not pumpable paste. Water is added to the re-pulper 122 via line 123, which may be e.g. a high shear mixer. The re-pulped tailings exit the re-pulper via line 124 and enter the pump 125.

From there the tailings are transported to the thickener 4, where they are mixed with concentrate particles entering via line 3. Alternatively the re-pulped tailings are transferred from the pump 125 to the slurry tank/slurry distribution box arrangement 7 via lines 126 and 127 and are mixed with the concentrate particles entering the same equipment via line 6.

### Example

A gold containing concentrate with a high carbon above 1 wt-% is fed into a system according to Fig. 5. Concentrate particles with an average particle size of 50 microns had been fed to a separation device during previous operation thereby resulting in the formation of pond/dam or area filled with small particles, which are present as tailings. During the time of operation of the separation device 5 - 50 % of the concentrate particles feed were directed to the pond/dam or storage are resulting to a loss of gold in the range of 3 - 20 g/ton of dry solids. The organic carbon content of the separated small particles is up to 20 wt.-%.

The small particles (tailings) have dried out partially within the pond/dam or area and are re-pulped via a re-pulper to a pumpable slurry. The small particles are pumped to the thickener, where they are mixed with the incoming stream of concentrate particles, considering that the particle separation device is no longer in operation.

After passing the roaster, 10 to 90 wt-% of the total calcine product are withdrawn in the gas-solid fraction. The small particles exiting the secondary cyclones have a small content in organic carbon and are discharged as product via cooler and quench. After cooling the gas-solid fraction to temperature of 350 °C, further small calcine particles are withdrawn in a cooler and an electrostatic precipitator. These small calcine particles are fed into a batch pelletizer whereby the batch phases below 1 hour, typically in the range of 15 minutes. The particle size optimum after the pelletizing is in the range of 100 to 500 µm for 60 to 100 wt-% of the pellets. Thereby, it is possible to reduce the carbon content in the roaster and the final calcine steam passed into later process steps to a value close to 0, especially < 0.1 wt-%.

### List of references

- 1: conduit
- 2: particle separation device
- 3: conduit
- 4: thickener
- 5, 6: conduit
- 7: slurry tank/ distribution box arrangement
- 8, 9: conduit
- 10: roaster
- 11-13: conduit
- 14: blower
- 15-17: conduit
- 20: cyclone
- 21: conduit
- 22: secondary cyclone(s)
- 23-25: conduit
- 26: cooler
- 27-29: conduit
- 30: electrostatic precipitator
- 31, 32: conduit
- 33: fan
- 34-38: conduit
- 40: quench
- 41,42: conduit
- 43: quench
- 44, 45: conduit
- 50: solid transportation system
- 51: conduit
- 52: blower
- 53-55: conduit
- 60: cooler
- 61: conduit
- 62: blower
- 63, 64: conduit
- 70: dry mill
- 71-73: conduit
- 74: wet grinding
- 75: conduit
- 80: pump
- 81- 83: conduit
- 84: de-watering device
- 85: conduit
- 86: buffer
- 87: conduit
- 88: dosing bin(s)
- 90: conduit
- 91: pelletizer
- 92: conduit
- 93: buffer
- 94: conduit
- 95: feeding device
- 96: conduit
- 111: conduit
- 112: pump
- 113-119: conduit
- 120: tailing pond/ dam or area
- 121: conduit
- 122: re-pulper
- 123, 124: conduit
- 125: pump
- 126, 127: conduit
- 130: cooler
- 131,132: conduit
- 133: conveying system
- 134: conduit

## Claims

1. A process for roasting of gold bearing sulfide concentrate, wherein concentrate particles with a carbon content of more than 0.5 wt-% are fed into a roaster where they are thermally treated at a temperature in the range of 500 and 1000 °C in a fluidized bed to form a calcine, and wherein at least parts of the calcine are withdrawn from the roaster together with a gas stream as a solid fraction, **characterized in that** concentrate particles with a diameter at least 50 % smaller than the average diameter of the concentrate particles are separated as small particles and/or that particles from the gas-solid-fraction are separated in at least one step as small calcine particles, that the small particles and/ or at least part of the small calcine particles are pelletized, whereby at least 80 % of the pellets feature a diameter of at least 80 % of the concentrate particles average diameter and that the pellets are fed into the roaster.

2. Process according to claim 1, **characterized in** the small particles and/ or at least part of the small calcine particles are pelletized by mixing with a liquid binder to form pellets.

3. Process according to claim 1 to 2, **characterized in that** the metal gold bearing sulfide concentrate has at least 10 g/t gold and/or a particle average diameter of at least 5 µm and/or results from gold bearing sulfide ore which has at least 0.5 g/t gold.

4. Process according to any of the preceding claims, **characterized in that** the amount of organic carbon in the sulfide concentrate particles is between 0.5 and 15 wt.-% and/ or that the amount of organic carbon in the small particles is 0.25 - 20 times that of the concentrate particles and/ or that the amount of organic carbon in the small calcine particles to be recycled to the roaster after pelletizing is more than 0.3 wt.-% and/ or that the organic carbon content of the product calcine particles directed to further process steps, e.g. leaching is below 0.3 wt.-%.

5. Process according to any of preceding claims, **characterized in that** the small particles are dewatered to a water content of less than 20 wt.-%.

6. Process according to any of the preceding claims, **characterized in that** the pelletizing is operated in batch mode.

7. Process according to any of the preceding claims, **characterized in that** the liquid binder comprises water or an aqueous solution containing sulfates and/or a low acid concentration.

8. Process according to any of the preceding claims, **characterized in that** dust with an average diameter of 5-100 µm and a sulfate content of above 1 wt.-% is fed into the pelletizing as a solid binder.

9. Process according to any of the preceding claims where the pelletization batch time is below 1 h.

10. Process according to any of the preceding claims, **characterized in that** the pellets are fed into the roaster with a water content below 20 wt.-%.

11. Process according to any of the preceding claims, **characterized in that** the calcine particles are milled and/or grinded.

12. Process according to any of the preceding claims, **characterized in that** small feed particles and/or small calcine particles are treated in the context of treating calcine from a Biological oxidation plant (BIOX) or pressure oxidation plant (POX).

## Patentansprüche

1. Verfahren zum Rösten von goldhaltigem Sulfidkonzentrat, wobei Konzentratteilchen mit einem Kohlenstoffgehalt von mehr als 0. 5 Gew.-% in einen Röster eingespeist werden, wo sie bei einer Temperatur im Bereich von 500 und 1000 °C in einer Wirbelschicht thermisch behandelt werden, um ein Kalzinat zu bilden, und wobei zumindest Teile des Kalzinats zusammen mit einem Gasstrom als feste Fraktion aus dem Röster abgezogen werden, **dadurch gekennzeichnet, dass** Konzentratteilchen mit einem Durchmesser, der mindestens 50 % kleiner ist als der mittlere Durchmesser der Konzentratteilchen, als kleine Teilchen abgetrennt werden und/oder dass Teilchen aus der Gas-Feststoff-Fraktion in mindestens einem Schritt als kleine Kalzinatteilchen abgetrennt werden, dass die kleinen Teilchen und/oder mindestens ein Teil der kleinen Kalzinatteilchen pelletiert werden, wobei mindestens 80 % der Pellets einen Durchmesser von mindestens 80 % des mittleren Durchmessers der Konzentratteilchen aufweisen und dass die Pellets dem Röster zugeführt werden.

2. Verfahren nach Anspruch 1, **dadurch gekennzeichnet, dass** die kleinen Teilchen und/oder zumindest ein Teil der kleinen Kalzinatteilchen durch Mischen mit einem flüssigen Bindemittel zu Pellets pelletiert werden.

3. Verfahren nach einem der Ansprüche 1 bis 2, **dadurch gekennzeichnet, dass** das metallische goldhaltige Sulfidkonzentrat mindestens 10 g/t Gold und/oder einen mittleren Teilchendurchmesser von mindestens 5 µm aufweist und/oder aus goldhaltigem Sulfiderz mit mindestens 0,5 g/t Gold stammt.

4. Verfahren nach einem der vorangehenden Ansprüche, **dadurch gekennzeichnet, daß** die Menge an organischem Kohlenstoff in den Sulfidkonzentratteilchen zwischen 0,5 und 15 Gew.- % beträgt und/oder dass die Menge an organischem Kohlenstoff in den kleinen Teilchen das 0,25- bis 20-fache der Konzentratteilchen beträgt und/oder dass die Menge an organischem Kohlenstoff in den kleinen Kalzinatteilchen, die nach dem Pelletieren in den Röster zurückgeführt werden, mehr als 0,3 Gew.-% beträgt und/oder dass der Gehalt an organischem Kohlenstoff in den Produktkalzinatteilchen, die weiteren Verfahrensschritten, z. B. dem Auslaugen, zugeführt werden, unter 0,3 Gew.-% liegt.

5. Verfahren nach einem der vorhergehenden Ansprüche, **dadurch gekennzeichnet, dass** die kleinen Partikel auf einen Wassergehalt von weniger als 20 Gew.-% entwässert werden.

6. Verfahren nach einem der vorhergehenden Ansprüche, **dadurch gekennzeichnet, dass** die Pelletierung im Batch-Betrieb erfolgt.

7. Verfahren nach einem der vorhergehenden Ansprüche, **dadurch gekennzeichnet, dass** das flüssige Bindemittel Wasser oder eine wässrige Lösung mit Sulfaten und/oder einer geringen Säurekonzentration ist.

8. Verfahren nach einem der vorhergehenden Ansprüche, **dadurch gekennzeichnet, dass** Staub mit einem mittleren Durchmesser von 5-100 µm und einem Sulfatgehalt von über 1 Gew.-% als festes Bindemittel der Pelletierung zugeführt wird.

9. Verfahren nach einem der vorhergehenden Ansprüche, wobei die Pelletierzeit unter 1 h liegt.

10. Verfahren nach einem der vorhergehenden Ansprüche, **dadurch gekennzeichnet, dass** die Pellets mit einem Wassergehalt unter 20 Gew.-% in den Röster eingebracht werden.

11. Verfahren nach einem der vorhergehenden Ansprüche, **dadurch gekennzeichnet, dass** die Kalzinatpartikel gemahlen und/oder geschrotet werden.

12. Verfahren nach einem der vorhergehenden Ansprüche, **dadurch gekennzeichnet, dass** kleine Beschickungsteilchen und/oder kleine Kalzinatteilchen im Rahmen der Behandlung von Kalzinat aus einer Biologischen Oxidationsanlage (BIOX) oder Druckoxidationsanlage (POX) behandelt werden.

## Revendications

1. Procédé destiné au grillage de concentré de sulfure aurifère, dans lequel des particules de concentré ayant une teneur en carbone de plus de 0,5 % en poids sont introduites dans un torréfacteur où elles sont traitées de manière thermique à une température comprise dans la plage allant de 500 à 1000 °C dans un lit fluidisé afin de former un produit calciné, et dans lequel au moins des parties du produit calciné sont retirées du torréfacteur ensemble avec un flux de gaz en tant que fraction solide, **caractérisé en ce que** des particules de concentré ayant un diamètre d'au moins 50 % inférieur au diamètre moyen des particules concentrées sont séparées en tant que petites particules et/ou que des particules provenant de la fraction gaz-solide sont séparées dans au moins une étape en tant que petites particules calcinées, que les petites particules et/ou au moins une partie des petites particules calcinées sont granulées, moyennant quoi au moins 80 % des granulés ont un diamètre d'au moins 80 % du diamètre moyen de particules concentrées et que les granulés sont introduits dans le torréfacteur.

2. Procédé selon la revendication 1, **caractérisé en ce que** les petites particules et/au moins une partie des petites particules calcinées sont granulées par mélange avec un liant liquide afin de former des granulés.

3. Procédé selon la revendication 1 ou la revendication 2, **caractérisé en ce que** le concentré de sulfure aurifère métallique a au moins 10 g par tonne d'or et/ou un diamètre moyen de particule d'au moins 5 µm et/ou des résultats provenant de minerai de sulfure aurifère qui a au moins 0,5 g par tonne d'or.

4. Procédé selon l'une quelconque des revendications précédentes, **caractérisé en ce que** la quantité de carbone organique dans les particules de concentré de sulfure est comprise entre 0,5 et 15 % en poids et/ou la quantité de carbone organique dans les petites particules représente entre 0,25 et 20 fois la quantité des particules concentrées et/ou que la quantité de carbone organique dans les petites particules calcinées devant être recyclées par le torréfacteur après granulation est supérieure à 0,3 % en poids et/ou que la teneur en carbone organique des particules de produit calciné dirigées vers des étapes de procédé supplémentaires, par exemple la lixiviation est inférieure à 0,3 % en poids.

5. Procédé selon l'une quelconque des revendications précédentes, **caractérisé en ce que** les petites particules sont déshydratées à une teneur en eau inférieure à 20 % en poids.

6. Procédé selon l'une quelconque des revendications précédentes, **caractérisé en ce que** la granulation est effectuée en mode de traitement par lots.

7. Procédé selon l'une quelconque des revendications précédentes, **caractérisé en ce que** le liant liquide comprend de l'eau ou une solution aqueuse contenant des sulfates et/ou une faible concentration en acide.

8. Procédé selon l'une quelconque des revendications précédentes, **caractérisé en ce que** de la poussière ayant un diamètre moyen compris entre 5 et 100 µm et une teneur en sulfate supérieure à 1 % en poids est introduite dans la granulation en tant que liant solide.

9. Procédé selon l'une quelconque des revendications précédentes, dans lequel le temps de lot de granulation est inférieur à 1 heure.

10. Procédé selon l'une quelconque des revendications précédentes, **caractérisé en ce que** les granulés sont introduits dans le torréfacteur avec une teneur en eau inférieure à 20 % en poids.

11. Procédé selon l'une quelconque des revendications précédentes, **caractérisé en ce que** les particules calcinées sont broyées et/ou concassées.

12. Procédé selon l'une quelconque des revendications précédentes, **caractérisé en ce que** des petites particules élémentaires et/ou des petites particules calcinées sont traitées dans le contexte de traitement produit calciné à partir d'une usine d'oxydation biologique (BIOX) ou d'une usine d'oxydation sous pression (POX).
